# EUROPEAN PATENT SPECIFICATION

(11) **EP 0 929 590 B1**
(45) Date of publication and mention of the grant of the patent: **29.05.2002**
(21) Application number: 96936089.0
(22) Date of filing: 30.09.1996
(51) Int. Cl.: C08G 59/62, C08J 5/04

(54) **HYDROXY-PHENOXYETHER POLYMER THERMOPLASTIC COMPOSITES**
THERMOPLASTISCHE HYDROXY-PHENOXYETHERPOLYMERVERBUNDWERKSTOFFE
COMPOSITES THERMOPLASTIQUES A BASE DE POLYMERES D'HYDROXY-PHENOXYETHER

(43) Date of publication of application: 21.07.1999
(73) Proprietor: THE DOW CHEMICAL COMPANY, Midland, Michigan 48674 (US)
(72) Inventor: BRENNAN, David, J., Midland, MI 48642 (US); WHITE, Jerry, E., Lake Jackson, TX 77566 (US); CALHOUN, Daryl, R., Gurnee, IL 60031-4263 (US)
(74) Representative: Casalonga, Axel
(86) International application number: US9615697
(87) International publication number: WO9814498

(56) References cited:
- EP-A- 0 249 262
- EP-A- 0 438 226
- WO-A-90/12828
- US-A- 5 068 268

## Description

This invention relates to fiber-reinforced composites and processes for making them.

Composites are well known in the art and are described, for example, in Kirk-Othmer Ency. Chem., Tech. - Supp., Composites, High Performance, pp. 260-281 (J. Wiley & Sons 1984). A composite typically comprises a plurality of fibers (reinforcing fibers) embedded in a plastic (the matrix). Typically, the fibers give strength and/or stiffness to the composite, and the matrix maintains fiber orientations and spacings, transmits shear loads between layers of fibers so that they resist bending and compression and protects the fiber from surface damage.

It is known to make matrix composites by several different processes. For instance, laminates are made by a prepreg process of:
(1) impregnating a woven or unwoven sheet of fibers with matrix resin precursors which are optionally dissolved in a solvent;
(2) optionally, heating the impregnated fibers to draw off solvent and/or partially cure the matrix resin, whereby a prepreg is formed;
(3) stacking a plurality of prepregs or impregnated sheets; and
(4) pressing and heating the stack to cure the matrix resin and form a cured laminate.
Pultruded parts are made by a process of:
(1) pulling a fiber tow through a die;
(2) injecting matrix resin precursor into the die to impregnate the fiber tow;
(3) optionally, wrapping the tow around a mandrel or otherwise shaping to a desired shape; and
(4) heating the impregnated tow to cure the resin.
Resin transfer molding makes parts by a process of:
(1) placing fibers or a fiber containing preform in a mold;
(2) injecting matrix resin precursor into the mold; and
(3) heating the mold to cure the matrix resin.
The common elements in each of the processes are:
(1) impregnating a fiber reinforcement with a formulation containing a matrix resin or its precursors; and
(2) heating the formulation to harden or cure the matrix resin.

Current matrix materials include the thermosets, such as polyesters, epoxy resins, phenolic, vinyl ester, polyimide, and silicone. The thermosets provide good chemical environmental durability, dimensional stability and good high temperature properties, but they are brittle, have limited shelf life and are time consuming to process. Some thermoplastic resins are also used in composites, such as, for example, polyetheretherketone (PEEK) and thermoplastic polyimide. The polyimide made in an uncrosslinked thermoplastic form by a condensation reaction has lower use temperature than the thermoset polyimide. The polyetheretherketone is expensive and has lower use temperature than epoxy. Composites prepared from the reaction product of a diglycidyl ether monomer and a multifunctional amine curing agent are also known. However, since the multifunctional curing agent causes the resulting polymer to crosslink, such composites are typically brittle and cannot be reshaped after fabrication. Metal, carbon and ceramic matrix composites are also known. However, ceramic and carbon matrix materials are expensive and brittle, and metal matrix materials are heavier than polymer matrix materials.

It would be desirable to provide a fiber-reinforced composite that is as processable as conventional epoxy thermosets but has thermoplastic-like thermoformability when fully cured.

In a first aspect, this invention is a thermoplastic composite containing:
(1) a fiber reinforcement; and
(2) a matrix resin
characterized in that the matrix resin is a thermoplastic hydroxy-phenoxyether polymer matrix.

In a second aspect, this invention is the use of a thermoplastic hydroxy-phenoxyether polymer as a matrix resin in a fiber-reinforced composite.

In a third aspect, the invention is a process to make a matrix composite by the steps of:
(1) impregnating a fiber-based reinforcement with a formulation containing matrix resin precursors; and
(2) heating the formulation to a temperature at which the matrix resin precursors react to form a desired matrix resin,
characterized in that the matrix resin precursors contain: (a) a diepoxide, and (b) at least one chain extender containing any one or more of: an amine containing about 2 amine hydrogens per molecule, sulfonamides containing about 2 sulfonamide hydrogens per molecule, or bisphenols containing about 2 phenolic hydroxyl groups per molecule, in a quantity such that the matrix resin is thermoplastic and has an EEW of at least about 25,000.

In a fourth aspect, the invention is a process to make a matrix composite by the steps of:
(1) at least partially prereacting a formulation containing matrix resin precursors to form oligomers or a thermoplastic matrix resin;
(2) impregnating a fiber-based reinforcement with the oligomers or thermoplastic matrix resin; and
(3) if necessary, heating the oligomers to cause them to react and form a matrix resin,
characterized in that the formulation contains: (a) a diepoxide, and (b) at least one chain extender containing any one or more of: an amine containing about 2 amine hydrogens per molecule, sulfonamides containing about 2 sulfonamide hydrogens per molecule, or bisphenols containing about 2 phenolic hydroxyl groups per molecule, in a quantity such that the matrix resin is thermoplastic and has an EEW of at least about 25,000.

Composites of the present invention and shaped articles containing them are useful for structural materials and parts. The matrix resin supplies superior toughness over most currently-used matrix resins. In addition, the monomers used in the process which forms the third aspect of the invention have relatively low viscosity and can be used without solvent if properly selected.

For the purposes of this invention, a fiber is an elongated body whose length dimension is much greater than the transverse dimensions of width and thickness. Generally, the fiber has an aspect ratio of at least 5, preferably at least 10, and a length of at least 0.1 inch, preferably at least 0.25 inch. The fiber can be continuous, or chopped fibers having an average length of up to 18 inches, preferably up to 10 inches, more preferably up to 4 inches. Fiber diameters in the range from 1 to 1000 microns are generally useful. Accordingly, the term fiber includes monofilament fiber, multifilament fiber, ribbon, strip, a plurality of any one or combinations thereof and having a regular or irregular cross-section. A plurality of fibers can be grouped together to form a twisted or untwisted yarn. The fibers or yarn may be formed as a felt, knitted, woven (plain, basket, satin and crow feet weaves), or formed into a fabric in any of a variety of conventional techniques. The fibers may also be formed into "nonwoven" fabrics, such as, for example, continuous strand random mats, by such conventional techniques.

Fibers which can be employed in the process of the present invention for preparing thermoplastic composites are described in numerous references, such as, for example, U.S. Patent 4,533,693; Kirk-Othmer Ency. Chem. Tech., Aramid Fibers, 213 (J. Wiley & Sons 1978); Kirk-Othmer Ency. Chem., Tech. - Supp., Composites, High Performance, pages 261-263; Ency. Poly. Sci. & Eng. The fibers can be of varying composition, provided that they do not melt as a composite is made therewith and, in general, are chosen so that the fibers provide improvements in physical properties, such as tensile strength, flexural modulus and electrical conductivity. Thus, high flexural modulus organic polymers such as polyamides, polyimides, aramids, metals, glass and other ceramics, carbon fibers, and graphite fibers, are suitable fiber materials. Examples of glass fibers, include E-glass and S-glass. E-glass is a low alkali, aluminum-borosilicate composition with excellent electrical properties and good strength and modulus. S-glass is a magnesium-aluminosilicate composition with considerably higher strength and modulus. Fiber rovings are also useful. A roving consists of a number of continuous yarns, strands, or tows collected into a parallel bundle with little or no twist.

As used herein, the term "hydroxy-phenoxyether polymer" means a polymer having aromatic ether moieties in its backbone chain and pendant hydroxyl groups. Hydroxy-phenoxyether polymers which can be employed in the practice of the present invention for preparing thermoplastic composites include:
(1) hydroxy-functional polyethers having repeating units represented by the formula: 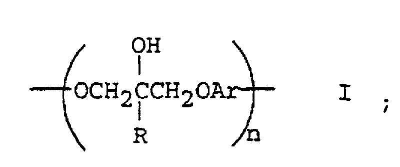
(2) amide- and hydroxymethyl-functionalized polyethers having repeating units represented by the formula: 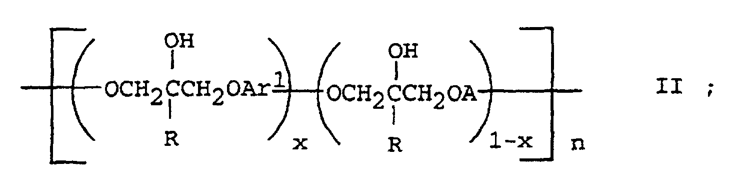
(3) hydroxy-functional poly(ether sulfonamides) having repeating units represented by the formula: 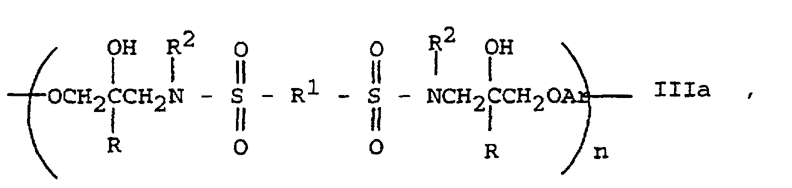 or 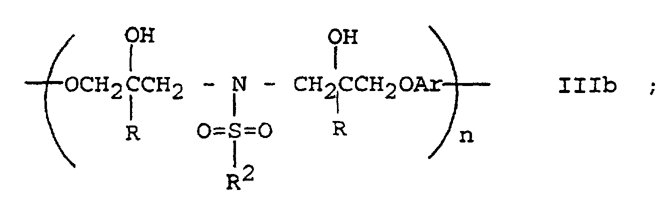
(4) poly(hydroxy amide ethers) having repeating units represented independently by any one of the formulae: 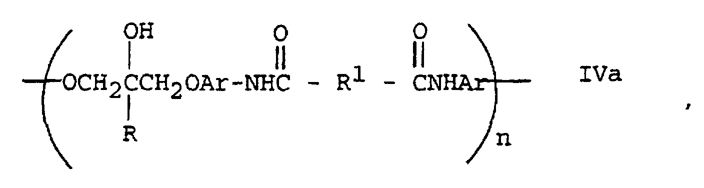 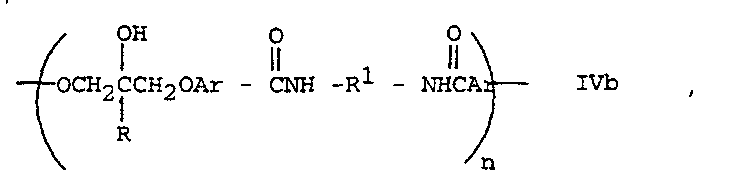 or 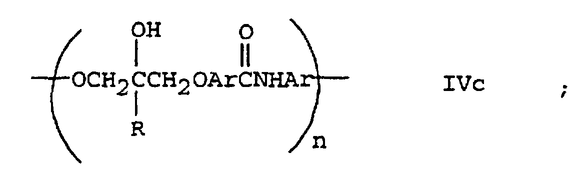
(5) poly(hydroxy ester ethers) having repeating units represented by the formula: 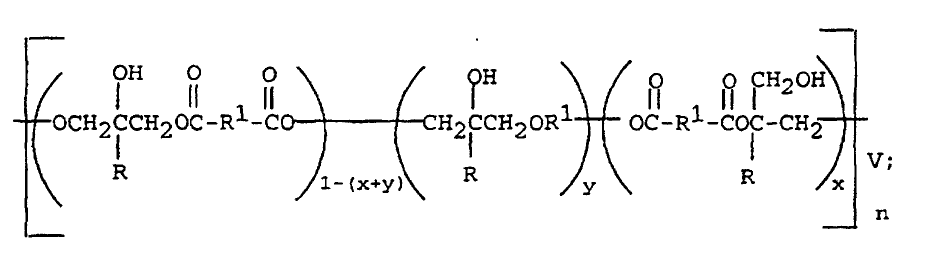
(6) poly(hydroxy amide ethers) having repeating units represented by any one of the formulae: 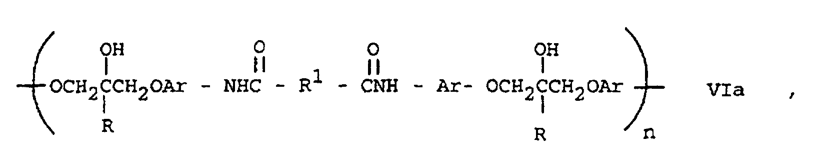 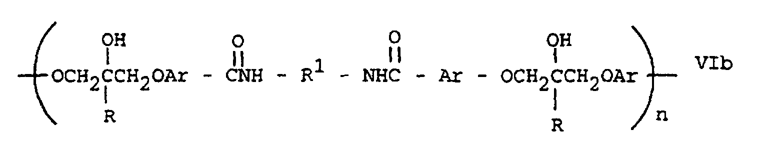 or 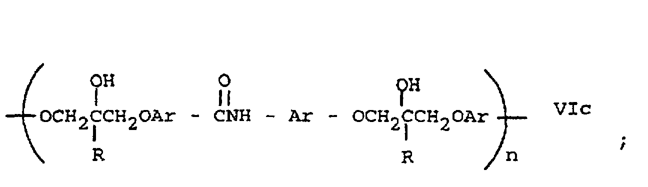
(7) polyetheramines having repeating units represented by the formula: 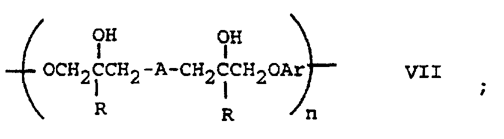 and
(8) hydroxy-phenoxyether polymers having repeating units represented by the formula: 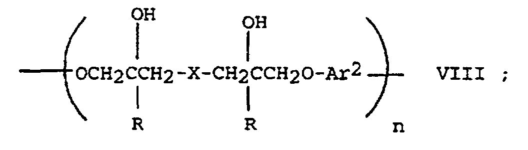
wherein each Ar individually represents an unsubstituted divalent aromatic moiety, substituted divalent aromatic moiety or heteroaromatic moiety, or a combination of different unsubstituted divalent aromatic moieties, substituted divalent aromatic moieties or heteroaromatic moieties; R is individually hydrogen or a monovalent hydrocarbyl moiety; each Ar¹ is a divalent aromatic moiety or combination of divalent aromatic moieties bearing amide or hydroxymethyl groups; R¹ is individually a predominantly hydrocarbylene moiety, such as an unsubstituted divalent aromatic moiety, substituted divalent aromatic moiety, divalent heteroaromatic moiety, divalent alkylene moiety, substituted divalent alkylene moiety or divalent heteroalkylene moiety or a combination of such moieties; R² is individually a monovalent hydrocarbyl moiety; A is a divalent amine moiety or a combination of different divalent amine moieties; X is a divalent amine, an arylenedioxy, an arylenedisulfonamido or an arylenedicarboxy moiety or combination of such moieties; and Ar² is a "cardo" moiety represented by any one of the formulae: 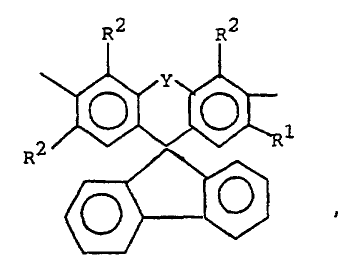 or 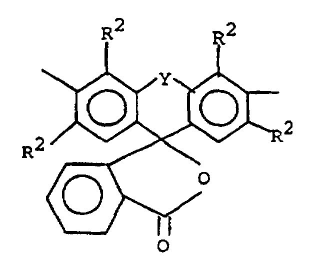 or 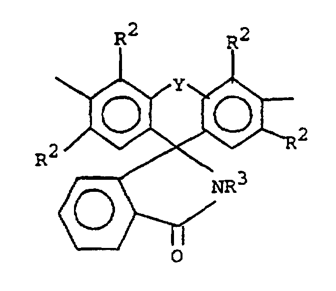 wherein Y is nil, a covalent bond, or a linking group, wherein suitable linking groups include, for example, an oxygen atom, a sulfur atom, a carbonyl atom, a sulfonyl group, or a methylene group or similar linkage; n is an integer from 10 to 1000; x is 0.01 to 1.0; and y is 0 to 0.5.

The term "predominantly hydrocarbylene" means a divalent radical that is predominantly hydrocarbon, but which optionally contains a minor amount of heteroatomic moiety such as oxygen, sulfur, imino and sulfonyl, sulfoxyl.

The hydroxy-phenoxyether thermoplastics commercially available from Phenoxy Associates, Inc., can also be employed in the practice of the present invention for preparing thermoplastic composites. These hydroxy-phenoxyether polymers are the condensation reaction products of a dihydric polynuclear phenol, such as bisphenol A, and an epihalohydrin and have the repeating units represented by Formula I wherein Ar is an isopropylidene diphenylene moiety. A process for preparing these polymers is described in U.S. Patent 3,305,528.

Generally, the hydroxy-phenoxyether polymers are prepared by reacting a difunctional species (that is, a species having two reactive groups), such as a dihydric phenol, with a diepoxide (that is, a compound having two epoxide functionalities) under conditions sufficient to cause the hydroxyl moieties to react with the epoxy moieties to form ether linkages. These polymers and processes for preparing them are described in more detail in U.S. Patents 5,164.472, 5,115,075, 5,134,218, 5,171,820, 5,089,588, 5.218,075 and 5,143,998, and copending U.S. Application Serial No. 08/116,023, filed September 2, 1993.

Diepoxides which can be employed in the practice of the present invention include the diglycidyl ethers of the dihydric phenols mentioned hereinafter, α,ω-diglycidyloxyisopropylidene-bisphenol-based phenoxy resins (commercially known as D.E.R.™ 300 and 600 series epoxy resins manufactured by The Dow Chemical Company), α,ω-diglycidyloxy tetrabromoisopropylidenebisphenol-based phenoxy resins, diglycidylamines and diglycidyl esters of dicarboxylic acids. Other diepoxides are described in U.S. Patents 5,115,075; 4,480,082 and 4,438,254, and in copending Applications U.S. Serial No. 800,340, filed on November 26, 1991, and U.S. Applications Serial No. 884,673, filed on May 18, 1992. Preferred diepoxides are the epoxy resins having an epoxy equivalent weight of from 100 to 4000. Most preferred diepoxides are the diglycidyl ethers of bisphenol A, 4,4'-sulfonyldiphenol, 4,4'-oxydiphenol, 4,4'-dihydroxybenzophenone, hydroquinone, 9,9-(4-hydroxyphenyl)fluorene and resorcinol.

Diepoxides need not be precisely difunctional. Most contain small amounts of mono-functional and/or trifunctional species. The "diepoxides" used in the present invention preferably contain on average at least 1.8 epoxy groups per molecule, more preferably at least 1.9, and most preferably at least 1.95. The "diepoxides" used in the present invention preferably contain on average no more than 2.1 epoxy group per molecule, more preferably no more than 2.05, and most preferably no more than 2.

Difunctional species or "chain extenders" which can be employed in the practice of the present invention for preparing thermoplastic composites include compounds having two reactive groups, such as dihydric phenols, dicarboxylic acids, bis-secondary amines, primary amines, dithiols, disulfonamides, and compounds that contain two different functionalities capable of reacting with epoxide groups.

Like diepoxides, the chain extenders contain about 2 reactive functionalities but need not contain precisely two reactive functionalities. Most contain small amounts of mono-functional and/or trifunctionat species. The "difunctional species" used in the present invention preferably contain on average at least 1.8 reactive moieties per molecule, more preferably at least 1.9, and most preferably at least 1.95. The "difunctional species" used in the present invention preferably contain on average no more than 2.1 reactive moieties per molecule, more preferably no more than 2.05, and most preferably no more than 2. The reactive moieties are typically active hydrogen moieties. For instance, a primary amine or primary sulfonamide group typically contains two active hydrogen moieties; whereas a phenolic hydroxyl group, secondary amine group, carboxylic acid group or thiol group typically contains one active hydrogen moiety.

Dihydric phenols which can be employed in the practice of the present invention include the bisphenols described in U.S. Patents 5,115,075; 4,480,082 and 4,438,254, and in copending U.S. Applications U.S. Serial No. 800,340, filed on November 26, 1991, and Serial No. 884,673, filed on May 18, 1992. Preferred dihydric phenols include the amide-containing bisphenols such as N,N'-bis(hydroxyphenyl) alkylenedicarboxamides, N,N'-bis(hydroxyphenyl)arylenedicarboxamides, bis(hydroxybenzamido)alkanes or bis(hydroxybenzamide)arenes, N-(hydroxyphenyl)-hydroxybenzamides, 2,2-bis(hydroxyphenyl}acetamides, N,N'-bis(3-hydroxyphenyl)glutaramide, N,N'-bis(3-hydroxyphenyl)adipamide, 1,2-bis(4-hydroxybenzamido)ethane, 1,3-bis(4-hydroxybenzamide)benzene, N-(4-hydroxyphenyl)-4-hydroxybenzamide, and 2,2-bis(4-hydroxyphenyl)-acetamide, 4,4'-isopropylidenebisphenol (bisphenol A), 9,9-bis(4-hydroxyphenyl)fluorene, hydroquinone, resorcinol, 4,4'-sulfonyldiphenol, thiodiphenol, 4,4'-oxydiphenol, 4,4'-dihydroxybenzophenone, tetrabromoisopropylidenebisphenol, dinitrofluorenylidenediphenylene, 4,4'-biphenol, 4,4'-dihydroxybiphenylene oxide, bis(4-hydroxyphenyl)methane, α,α-bis(4-hydroxyphenyl)ethyl-benzene, 2,6-dihydroxynaphthylene. More preferred dihydric phenols are 4.4'-isopropylidenebisphenol (bisphenol A), 9,9-bis(4-hydroxyphenyl)fluorene, hydroquinone, resorcinol, 4,4'-sulfonyldiphenol, 4,4'-thiodiphenol, 4,4'-oxydiphenol, 4,4'-dihydroxybenzophenone, tetrabromoiso-propylidenebisphenol, dinitrofluorenylidenediphenylene, 4,4'-biphenol, bis(4-hydroxyphenyl)methane, α,α-bis(4-hydroxyphenyl)ethylbenzene and 2,6-dihydroxynaphthylene. Most preferred dihydric phenols are 4,4'-isopropylidenebisphenol (bisphenol A), 4,4'-sulfonyldiphenol, 4,4'-oxydiphenol, 4,4'-dihydroxybenzophenone, and 9,9-bis(4-hydroxy-phenyl)fl uorene.

A process for preparing the amide-containing bisphenols is described in U.S. Patent 5,134,218.

Dicarboxylic acids which can be employed in the practice of the present invention include phenylene dicarboxylic acids, biphenylene dicarboxylic acids, naphthalene dicarboxylic acids, and alkylene dicarboxylic acids. Preferred dicarboxylic acids include isophthalic acid, terephthalic acid, 4,4'-biphenylene dicarboxylic acid, 3,4'-biphenylene dicarboxylic acid, 3,3'-biphenylenedicarboxylic acid, 2,6-naphthalenedicarboxylic acid, and adipic acid. Most preferred dicarboxylic acids are isophthalic acid, terephthalic acid, 4,4'-biphenylenedicarboxylic acid, and 2,6-naphthalenedicarboxylic acid.

Bis-secondary amines which can be employed in the practice of the present invention include piperazine and substituted piperazines, for example, dimethylpiperazine and 2-methylamidopiperazine; bis(N-methylamino)benzene, 1,2-bis(N-methylamino)ethane, and N,N'-bis(2-hydroxyethyl)ethylenediamine. Preferred bis-secondary amines are piperazine, dimethylpiperazine, and 1,2-bis(N-methylamino)ethane. The most preferred bis-secondary amine is piperazine.

Primary amines which can be employed in the practice of the present invention include aniline and substituted anilines, for example, 4-(methylamido)-aniline, 4-methylaniline, 4-methoxyaniline, 4-tert-butylaniline, 3,4-dimethoxyaniline, 3,4-dimethyaniline; alkylamines, and substituted alkyl amines, for example, butylamine and benzylamine; and alkanol amines; for example, 2-aminoethanol and 1-aminopropan-2-ol. Preferred primary amines are aniline, 4-methoxyaniline, 4-tert-butylaniline, butylamine, and 2-aminoethanol. Most preferred primary amines are 4-methoxyaniline and 2-aminoethanol.

Dithiols which can be employed in the practice of the present invention include those represented by the formula HS-R-SH, wherein R is a predominantly hydrocarbylene moiety or a divalent aromatic moiety. Preferably, R is (1) alkylene or cycloalkylene which has from 2 to 20 carbons and may contain a heteroatomic moiety such as oxygen, sulfur, sulfonyl, or sulfoxyl or (2) arylene which has from 5 to 25 carbons, may contain a heteroatomic moiety and may be substituted with alkyl, alkoxy, halo, nitro, cyano or cycloalkyl groups. The most preferred dithiol is 4,4'-dimercaptodiphenyl ether (DMPE). Dithiols and processes for preparing them are well known. See, for example, U.S. Patent 3,326,981 and Sutter Scrutch Field, Journal of The American Chemical Society, Vol. 58, pp. 54, 1936.

Disulfonamides which can be employed in the practice of the present invention include N,N'-dimethyl-1,2-benzenedisulfonamide, N,N'-dimethyl-1,3-benzenedisulfonamide, N,N'-dimethyl-1,4-benzenedisulfonamide, N,N'-bis(2-hydroxyethyl)-1,2-benzenedisulfonamide, N,N'-bis(2-hydroxyethyl)-1,3-benzenedisulfonamide, N,N'-bis(2-hydroxyethyl)-1,4-benzenedisulfonamide, N,N'-bis(2-hydroxyethyl)- 4.4-biphenyldisulfonamide, N,N'-diphenyl-1,2-benzenedisulfonamide, N,N'-Biphenyl-1,3-benzenedisulfonamide, N,N'-1,4-benzenedisulfonamide, N,N'-dimethyl-4,4'-biphenylenedisulfonamide, N,N'-dimethyl-4,4'-oxydiphenylenedisulfonamide, N,N'-dimethyl-4,4'-thiodiphenylenedisulfonamide, N,N'-dimethyl-4,4'-methylenediphenylenedisulfonamide, and N,N'-dimethyl-4,4'-sulfonyldiphenylenedisulfonamide. Preferred disulfonamides include N,N'-dimethyl-1,3-benzenedisulfonamide and N,N'-bis(2-hydroxyethyl)-4,4'-biphenyldisulfonamide. The disulfonamides are prepared by reactions of primary aliphatic or aromatic amines with bis(chlorosulfonyl) alkanes and arenes. These sulfonamides are described in U.S. Patent 5,149,768.

Compounds containing two different functionalities capable of reacting with epoxide groups which can be employed in the practice of the present invention include hydroxybenzoic acids, N-alkylamino acids, N-alkylaminophenols, and N-alkylsulfonamidophenols. Preferred are salicylic acid and 4-hydroxybenzoic acid. Most preferred is 4-hydroxybenzoic acid.

The ratio of diepoxide to difunctional species is preferably selected such that the resulting matrix resin contains very little active epoxide groups to undergo cross-linking reactions. The matrix resin preferably has an epoxy equivalent weight (EEW) of at least 10,000; more preferably at least 25,000; and more highly preferably at least 50,000. Most preferably, the matrix resin contains essentially no active epoxide groups (EEW 1,000,000+).

The ratio of diepoxide to difunctional species is preferably selected such that the matrix resin is a high-molecular weight thermoplastic. The matrix resin preferably has a weight average molecular weight of at least 10,000; more preferably at least 25,000; more highly preferably at least 50,000; and most preferably at least 100,000. The maximum weight average molecular weight is not critical, but is usually less than 5,000,000.

These two objectives are usually achieved by using from about a stoichiometric quantity to a slight excess of difunctional species over diepoxide. The equivalent ratio of difunctional species to diepoxide is preferably at least 95 percent, more preferably at least 98 percent and most preferably at least 100 percent. The equivalent ratio is preferably no more than 120 percent, more preferably no more than 110 percent and most preferably no more than 105 percent.

The monomers are selected such that the matrix resin is thermoplastic, that is, not highly cross-linked. This can be tested by checking the solubility of the matrix resin. Thermoplastic matrix resins will form at least a 1 weight percent solution in dimethylformamide at 25°C, preferably at least a 5 weight percent solution, and more preferably a 10 weight percent solution. Cross-linked matrix resins will not.

A process which can be employed in the practice of the present invention for preparing the thermoplastic composite comprises forming in the presence of reinforcing fibers a hydroxy-phenoxyether polymer by the *in situ* polymerization of a stoichiometric mixture of a diepoxide and a difunctional species in the presence of the reinforcing fibers. For example, a low viscosity liquid resin can be prepared by mixing the diglycidyl ether of bisphenol A (such as D.E.R.™ 332 epoxy resin) and a difunctional species such as monoethanolamine, in a suitable ratio, such as 1:1. This liquid resin can be applied to the reinforcing fibers such as, for example, by pouring it onto a single- or multi-ply glass/carbon fabric and allowing the resin to penetrate the glass/carbon fabric. The composite part can then be formed by conventional methods, such as by application of heat and pressure. This process may be adapted to many known methods for making composites, such as prepregging, pultrusion and resin-transfer molding processes.

In some cases, it may be desirable to partially prereact the diepoxide and difunctional species to form oligomers before they are contacted with the fibers. The oligomers may be undesirable because they have higher viscosity than the diepoxide and difunctional species. On the other hand, the prereaction may shorten the cure time needed for the composite and thus increase the line speed or reduce the cycle time for the composite manufacturer.

The amount of matrix resin applied to the reinforcing fibers can vary over a wide range, depending on the rigidity, shape, heat resistance, wear resistance and other properties desired for the composite, but, in general, the amount is up to 95 percent by volume of the fibers. Preferably, the amount is from 10 to 80, more preferably from 30 to 75, and most preferably from 40 to 60 percent, based on the total volume of the fibers.

Another process which can be employed in the practice of the present invention for preparing the thermoplastic composite comprises applying a hydroxy-phenoxyether polymer, described previously, directly onto the reinforcing fibers by solvent casting. Generally, the process comprises dissolving the polymer in a suitable solvent, pouring the solution on the surface of the reinforcing fibers and then evaporating the solvent by known means such as, for example, by passing the reinforcing fibers containing the polymer solution through an oven, leaving the remaining solid polymer on the reinforcing fibers. Solvent casting is a well known process and is described, for example, in the Plastics Engineering Handbook of the Society of the Plastics Industry, Inc., 4th Edition, page 448.

The hydroxy-phenoxyether polymer can also be applied directly onto the reinforcing fibers by compression molding the solid polymer onto the reinforcing fibers at temperatures above the glass transition temperature of the hydroxy-phenoxyether polymer. Generally, the process comprises applying an appropriate amount of the solid polymer on the surface of the reinforcing fibers, loading the reinforcing fibers containing the solid polymer into the lower half of a two-piece mold which provides a cavity having the shape of the desired molded article; bringing together under pressure the two parts of the mold; heating the mold to soften the polymer and form it into a continuous mass having the shape of the cavity; and then hardening the mass by chilling it under pressure and removing the resulting composite from the mold. In general, the time and pressure needed to form the composite and to achieve optimal properties will depend on the chemical composition and molecular weight of the matrix and processing temperature. Advantageously, the solid polymer is applied in powder form, in a substantially even manner on the surface of the reinforcing fibers, by conventional methods, such as by hand, by flour-sifter type apparatus, or by electrostatic spraying. The term "substantially even manner" means that the polymer powder is applied on the surface of the reinforcing fibers in a manner such that the thickness of the powder after melting is uniform throughout the surface of the reinforcing fibers. Generally, the average thickness of the powder, after melting, is from 5 microns to 80, preferably from 15 to 50, more preferably from 25 to 35, microns. Compression molding is a well known process. See, for example, the Plastics Engineering Handbook of the Society of the Plastics Industry, Inc., 4th Edition, pages 204-240.

The resin matrix generally occupies much, and preferably substantially all, of the void spaces left by the reinforcing fibers. It is contemplated, however, that some of these void spaces may also be taken by fillers, or other reinforcements.

Various other techniques are suitable for placing the resin matrix around the reinforcing fibers. One such other technique is to coat each fiber, or some of the fibers, with matrix polymer, arrange the coated fibers into the desired network structure and then heat-set the overall structure so as to cause the matrix polymer to flow and occupy the remaining void spaces. Another suitable technique is to arrange layers or other structures of fibers adjacent and between various forms, e.g. films, of the matrix polymer and then to heat-set the overall structure.

The resin matrix of the present invention is thermoplastic and not crosslinked. It has the ability to be reshaped above its glass transition temperature. It is tougher than the thermoset matrix resin since it has the ability to absorb external stresses, while the thermoset matrix resin is more likely to fracture when exposed to applied stress.

Composites of the present invention can be fabricated into shaped articles useful for structural materials and parts by conventional thermoforming or other fabrication techniques.

The following working examples and comparative examples are given to illustrate the invention and should not be construed to limit its scope. Unless otherwise indicated, all parts and percentages are by weight.

### Example 1

### A. Preparation of Hydroxy-phenoxyether Polymer Thermoplastic Composite

To a 100-mL jar was added an epoxy resin (D.E.R.™ 332 epoxy resin, 52.2 g of epoxy equivalent weight = 171.9 g/equivalent epoxide, 0.303 mol epoxide) and monoethanolamine (9.2 g, 0.151 mol, 0.301 mol N-H). The mixture was stirred until well-mixed, then half of the resin is poured into a 6 inch x 6 inch x 0.03 inch (15 cm x 15 cm x 0.76 mm) thick molding frame on top of a support consisting of a 5 mil (0.1 mm) aluminum sheet sandwiched between a 3 mil (0.06 mm) tetrafluorethylene fluorocarbon-coated sheet (top) and 1/16 inch (1.5 mm) stainless steel plate (bottom). A 6 inch x 6 inch (15 cm x 15 cm) single-ply glass fiber/carbon fiber woven fabric (32 oz/sq. yd or 1.1 ^{kg}/_{m²}) is placed into the mold. The remainder of the resin was poured on top of the fabric, followed by the placement of (in order) a tetrafluorethylene fluorocarbon-coated sheet, aluminum sheet, and stainless steel plate. The assembled molding apparatus was compression molded using the regimen shown in Table I:

**Table I**

| Step | Temp (°F/°C) | T rate¹ | Force (lb/kg) | F rate² | Dwell time (min) |
|---|---|---|---|---|---|
| 1 | 392/200 | 200 | 500/226 | 1200 | OFF |
| 2 | 392/200 | 200 | 5,000/2267 | 1200 | 10 |
| 3 | 392/200 | 200 | 80,000/36287 | 1200 | 4 |
| 4 | 120/48 | 200 | 80,000/36287 | 1200 | 10 |
| 5 | END | --- | --- | --- | --- |

| | | | | | |
|---|---|---|---|---|---|
| ¹ Temperature change in °F/minute | | | | | |
| ² Change in force in lb./second | | | | | |

When cool, the 6 inch x 6 inch x 0.035 inch (15 cm x 15 cm x 0.88 mm) composite was removed from the molding frame.

### B. Thermoforming

The composite prepared in Part A was placed into a convection oven at 200°C (392°F) on top of an aluminum block which contains a cylindrical cavity that was 0.75 inches (19.05 mm) deep and 2.5 inches (63.5 mm) in diameter. After one hour, a cylindrical weight (1 kg) with a diameter of 1.5 inches (38.1 mm) was placed on the composite part above the cavity. The weight caused the composite to press into the cavity, yielding a shallow depression in the composite that was approximately 0.5 inches (12.7 mm) deep and 1.5 (38.1 mm) to 2.5 inches (63.5 mm) wide. The assembly was removed from the oven and allowed to cool below the glass transition temperature of the matrix resin (80°C) (176°F). The shape of the composite was maintained when cool.

In contrast, a composite prepared from the same fabric but using a thermosetting epoxy resin-based matrix resin cannot be thermoformed without cracking the matrix.

### C. Mechanical Properties

A second 6 inch x 6 inch x 0.035 inch (15 cm x 15 cm x 0.88 mm) composite sheet was prepared as described above. Tensile, flexural, and impact properties of the composite are measured in accordance with ASTM test methods D-638, D-790 and D-256, respectively, and the results are shown in Table II. A composite structure of the same thickness was prepared from the same fabric but using a thermosetting epoxy resin-based matrix resin. The mechanical properties of the thermoset composite were similarly measured and the results are also shown in Table II.

**Table II**

| Property | Thermoplastic Composite | Thermoset Composite |
|---|---|---|
| Sample thickness, inches (mm) | 0.035 - 0.040 (.88 - 1.01 mm) | 0.035 - 0.037 (.88 - .93 mm) |
| Tg¹, °C | 78 | Can not be detected |
| Thermoformability | Yes | No |
| Tensile Yield², psi (pascal) | 40,000 | 39,000 |
| Tensile Break³ psi (pascal) | 20,000 | 40,600 |
| Tensile Modulus⁴, psi (pascal) | 2.2 x 10⁶ | 4.0 x 10⁶ |
| Flexural Modulus⁵ psi (pascal) | 2.2 x 10⁶ | 2.0 x 10⁶ |
| Flexural Strength⁶, psi (pascal) | 28,200 | 23,000 |
| Dynatup Impact⁷, 0.035" (.88 mm) | 17.3 (23.45J | 11.5 (15.59J |
| Total Energy, ft-lb (J) Maximum Load, lb (kg) | 404 (183.25 kg) | 317 (143.78 kg) |

| | | |
|---|---|---|
| ¹ Tg - glass transition temperature determined using a DuPont Model 2100 differential scanning calorimeter (DSC) operation in a heating mode at 20 °C/minute | | |
| ² Tensile Yield - ASTM D-638 | | |
| ³ Tensile Break - ASTM D-638 | | |
| ⁴ Tensile Modulus - ASTM D-638 | | |
| ⁵ Flexural Modulus - ASTM D-790 | | |
| ⁶ Flexural Strength - ASTM D-790 | | |
| ⁷ Dynatup Impact - ASTM D-376386 ⁷ Dynatup Load - ASTM D-376386 | | |

### D. Extraction with Dimethyl Formamide

Specimens of the hydroxy-phenoxyether polymer thermoplastic composite and the epoxy thermoset composite prepared in Part B are suspended in dimethyl formamide. The dimethyl formamide dissolves the hydroxy-phenoxyether polymer thermoplastic composite matrix but not the epoxy thermoset matrix, which indicates that the hydroxy-phenoxyether polymer thermoplastic composite is uncrosslinked while the epoxy thermoset matrix is crosslinked.

## Claims

1. A thermoplastic composite containing:
(1) a fiber reinforcement; and
(2) a matrix resin
**characterized in that** the matrix resin is a thermoplastic hydroxy-phenoxyether polymer.

2. Use of a thermoplastic hydroxy-phenoxyether polymer as a matrix resin in a fiber-reinforced composite.

3. An invention as described in any of Claims 1 or 2 wherein the hydroxy-phenoxyether polymer contains any of the following repeating units:
(1) hydroxy-functional polyethers repeating units represented by the formula: 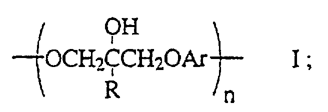
(2) amide- or hydroxymethyl-functionalized polyether repeating units represented by the formula: 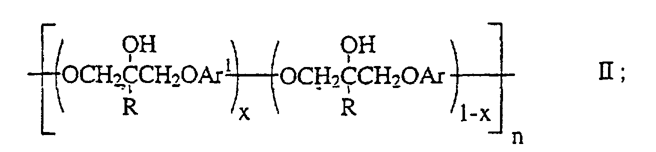
(3) hydroxy-functional poly(ether sulfonamide) repeating units represented by the formula: 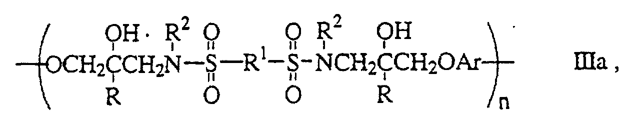 or 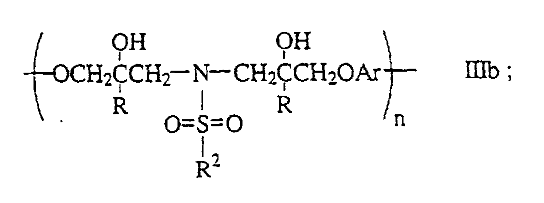
(4) poly(hydroxy amide ether) repeating units represented independently by any one of the formulae: 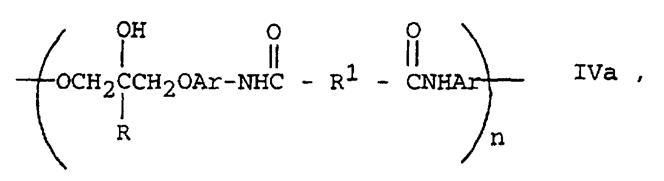 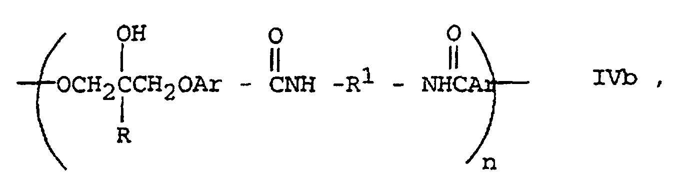 or 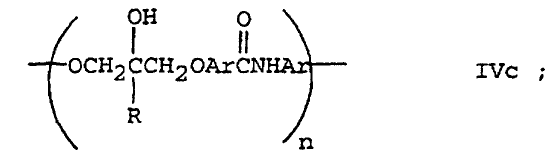
(5) poly(hydroxy ester ether) repeating units represented by the formula: 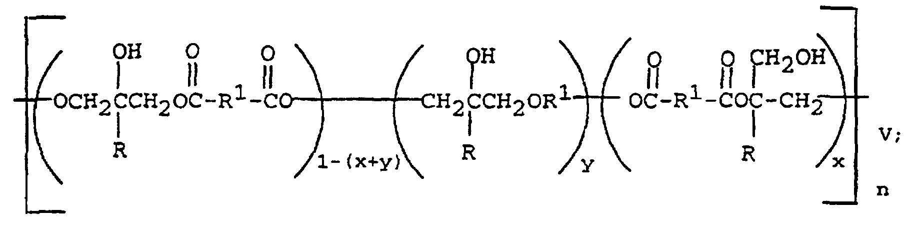
(6) poly(hydroxy amide ether) repeating units represented by any one of the formulae: 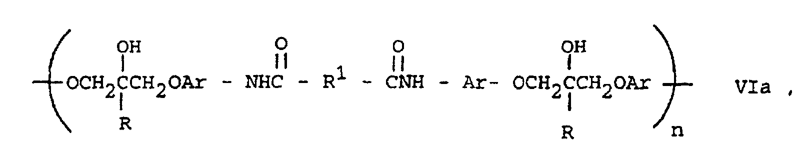 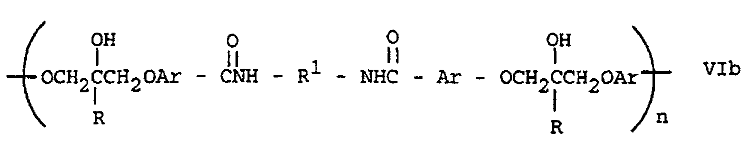 or 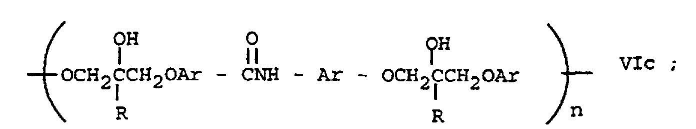
(7) polyetheramine repeating units represented by the formula: 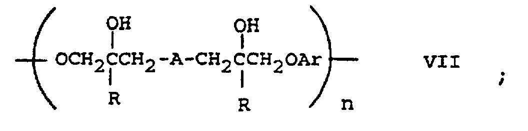 and
(8) hydroxy-phenoxyether repeating units represented by the formula: 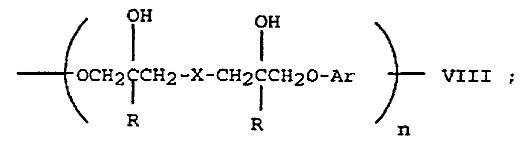
wherein each Ar individually represents an unsubstituted divalent aromatic moiety, substituted divalent aromatic moiety or heteroaromatic moiety, or a combination of different unsubstituted divalent aromatic moieties, substituted aromatic moieties or heteroaromatic moieties; R is individually hydrogen or a monovalent hydrocarbyl moiety; each Ar¹ is a divalent aromatic moiety or combination of divalent aromatic moieties bearing amide or hydroxymethyl groups; R¹ is individually a predominantly hydrocarbylene moiety; R² is individually a monovalent hydrocarbyl moiety; A is a divalent amine moiety or a combination of different divalent amine moieties; X is a divalent amine, an arylenedioxy, an arylenedisulfonamido or an arylenedicarboxy moiety or combination of such moieties; and Ar² is a "cardo" moiety represented by any one of the formulae: 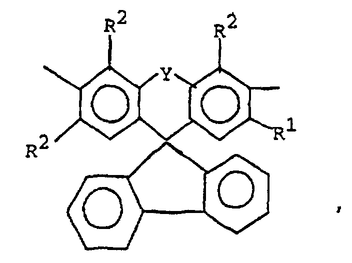 or 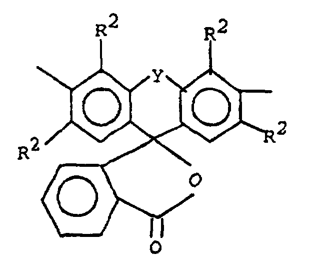 or 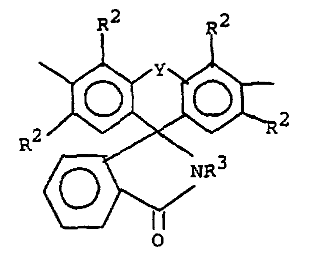 wherein Y is nif, a covalent bond, or a linking group selected from an oxygen atom, a sulfur atom, a carbonyl atom, a sulfonyl group, and a methylene group; n is an integer from 10 to 1000; x is 0.01 to 1.0; and y is 0 to 0.5.

4. The invention as described in any of the previous claims wherein the matrix resin has an epoxy equivalent weight (EEW) of at least 25,000.

5. The invention as described in any of the previous claims wherein the matrix resin is soluble in dimethylformamide to a concentration of at least 1 weight percent at 25°C.

6. A process to make a matrix composite by the steps of:
(1) impregnating a fiber-based reinforcement with a formulation containing matrix resin precursors; and
(2) heating the formulation to a temperature at which the matrix resin precursors react to form a desired matrix resin,
**characterized in that** the matrix resin precursors contain: (a) a diepoxide, and (b) at least one chain extender containing any one or more of: an amine containing about 2 amine hydrogens per molecule, sulfonamides containing about 2 sulfonamide hydrogens per molecule, or bisphenols containing about 2 phenolic hydroxyl groups per molecule, in a quantity such that the matrix resin is thermoplastic and has an EEW of at least about 25,000.

7. A process to make a matrix composite by the steps of:
(1) at least partially prereacting a formulation containing matrix resin precursors to form oligomers or a thermoplastic matrix resin;
(2) impregnating a fiber-based reinforcement with the oligomers or thermoplastic matrix resin; and
(3) if necessary, heating the oligomers to cause them to react and form a matrix resin,
**characterized in that** the formulation contains: (a) a diepoxide, and (b) at least one chain extender containing any one or more of: an amine containing about 2 amine hydrogens per molecule, sulfonamides containing about 2 sulfonamide hydrogens per molecule, or bisphenols containing about 2 phenolic hydroxyl groups per molecule, in a quantity such that the matrix resin is thermoplastic and has an EEW of at least about 25,000.

8. A process as described in any of Claims 6 or 7, wherein the chain extender is any one or more of: a primary alkylamine, a primary alkanolamine, a di-(secondary amine) or a bisphenol.

9. A process as described in any of Claims 6 to 8 wherein at least 50 equivalent percent of the chain extender is made up of a primary alkylamine or alkanolamine.

10. A process as described in any of Claims 6 to 9 wherein the ratio of chain extender to diepoxide is at least 1:1.

11. A process as described in any of Claims 6 to 10 wherein the matrix resin precursors are selected such that the matrix resin is soluble in dimethylformamide at 25°C up to at least 1 weight percent.

## Patentansprüche

1. Thermoplastischer Verbundwerkstoff, enthaltend:
(1) eine Faserverstärkung und
(2) ein Matrixharz,
**dadurch gekennzeichnet, daß** das Matrixharz ein thermoplastisches Hydroxy-phenoxyetherpolymeres ist.

2. Verwendung eines thermoplastischen Hydroxy-phenoxyetherpolymeren als ein Matrixharz in einem faserverstärkten Verbundwerkstoff.

3. Erfindung wie in einem der Ansprüche 1 oder 2 beschrieben, worin das Hydroxy-phenoxyetherpolymere irgendeine der folgenden sich wiederholenden Einheiten enthält:
(1) sich wiederholende hydroxy-funktionelle Polyethereinheiten, die durch die Formel wiedergegeben werden: 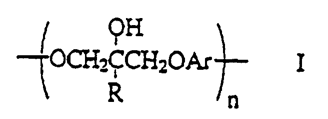
(2) sich wiederholende amid- oder hydroxymethyl-funktionalisierte Polyethereinheiten, die durch die Formel wiedergegeben werden: 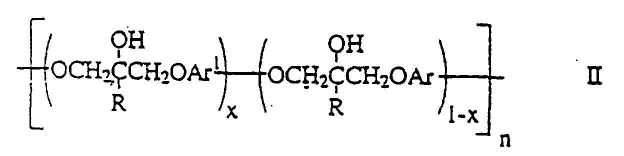
(3) sich wiederholende hydroxy-funktionalisierte Poly(ethersulfonamid)einheiten, die durch die Formel wiedergegeben werden: 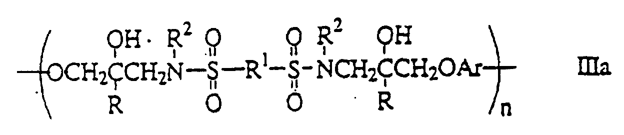 oder 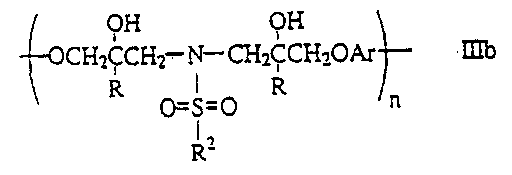
(4) sich wiederholende Poly(hydroxyamidether)einheiten, die unabhängig durch eine der Formeln wiedergegeben werden: 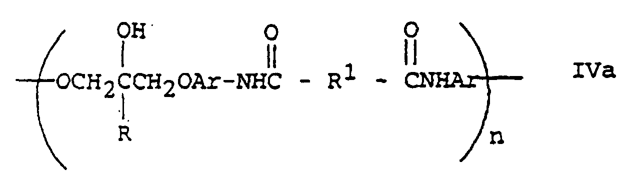 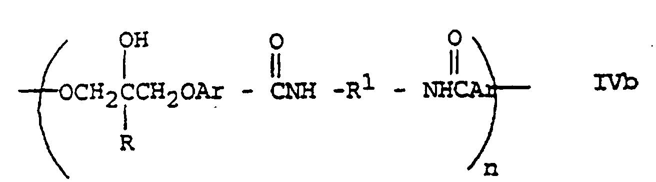 oder 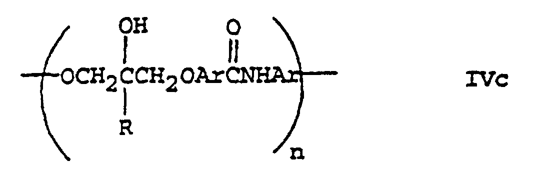
(5) sich wiederholende Poly(hydroxyesterether)einheiten, die durch die Formel wiedergegeben werden: 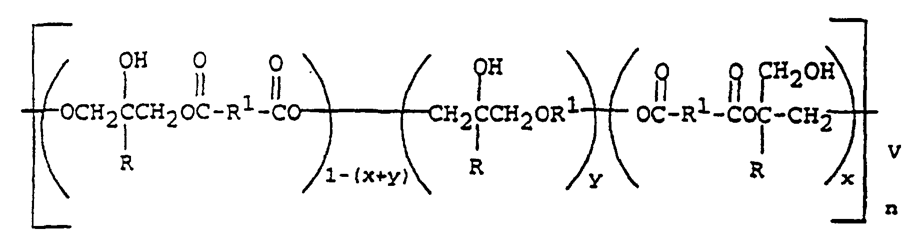
(6) sich wiederholende Poly(hydroxyamidether)einheiten, die durch irgendeine der Formeln wiedergegeben werden: 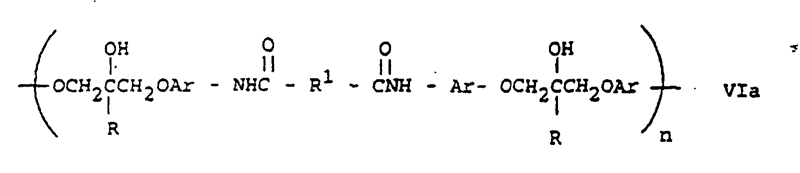 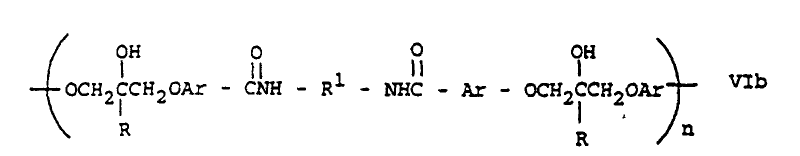 oder 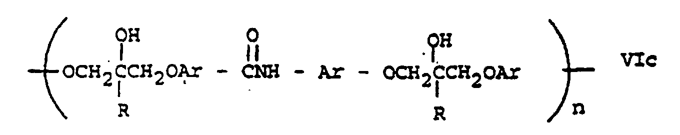
(7) sich wiederholende Polyetheramineinheiten, die durch die Formel wiedergegeben werden: 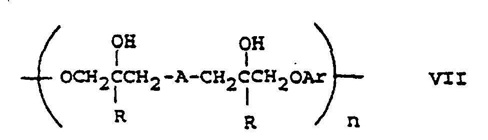 und
(8) sich wiederholende Hydroxy-phenoxyethereinheiten, die durch die Formel wiedergegeben werden: 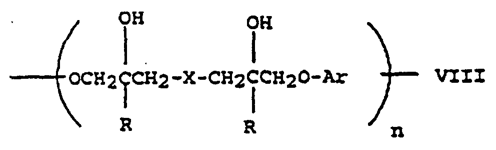
worin jedes Ar einzeln eine nicht-substituierte zweiwertige aromatische Einheit, substituierte zweiwertige aromatische Einheit oder heteroaromatische Einheit oder eine Kombination von unterschiedlichen nicht-substituierten zweiwertigen aromatischen Einheiten, substituierten zweiwertigen aromatischen Einheiten oder heteroaromatischen Einheiten darstellt; R einzeln Wasserstoff oder eine einwertige Hydrocarbyleinheit ist; jedes Ar' eine zweiwertige aromatische Einheit oder eine Kombination von zweiwertigen aromatischen Einheiten, die Amid- oder Hydroxymethylgruppen tragen, ist; R¹ einzeln eine überwiegende Hydrocarbyleneinheit ist; R² einzeln eine einwertige Hydrocarbyleinheit ist; A eine zweiwertige Amineinheit oder eine Kombination von verschiedenen zweiwertigen Amineinheiten ist; X eine zweiwertige Amin-, eine Arylendioxy-, eine Arylendisulfonamido- oder eine Arylendicarboxyeinheit oder eine Kombination solcher Einheiten ist; und Ar² eine "Cardo"-einheit ist, die durch eine der Formeln wiedergegeben wird: 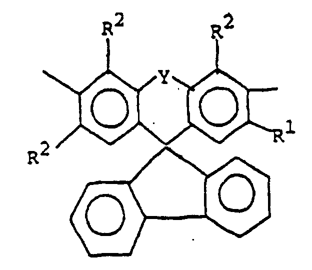 oder 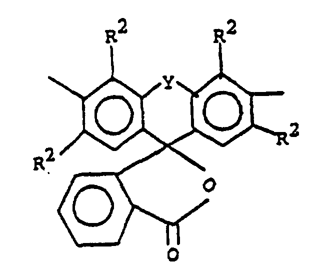 oder 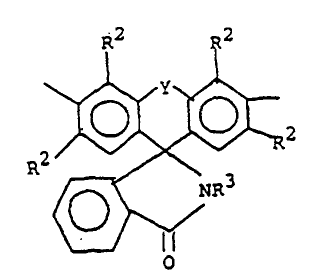 worin Y nichts, eine kovalente Bindung oder eine verbindende Gruppe, ausgewählt aus einem Sauerstoffatom, einem Schwefelatom, einem Carbonylatom, einer Sulfonylgruppe und einer Methylengruppe, ist; n eine ganze Zahl von 10 bis 1000 ist; x = 0,01 bis 1,0 ist und y = 0 bis 0,5 ist.

4. Erfindung wie in einem der vorangegangenen Ansprüche beschrieben, worin das Matrixharz ein Epoyäquivalentgwicht (EEW) von wenigstens 25.000 hat.

5. Erfindung wie in einem der vorangegangenen Ansprüche beschrieben, worin das Matrixharz in Dimethylformamid bis zu einer Konzentration von wenigstens 1 Gew.-% bei 25°C löslich ist.

6. Verfahren zur Herstellung eines Matrix-Verbundwerkstoffes durch die Stufen von:
(1) Imprägnieren einer auf Fasern basierenden Verstärkung mit einer Formulierung, die Matrixharz-Vorläufer enthält, und
(2) Erhitzen der Formulierung bis auf eine Temperatur, bei der die Matrixharz-Vorläufer zur Bildung eines gewünschten Matrixharzes reagieren,
**dadurch gekennzeichnet, daß** die Matrixharz-Vorläufer enthalten:
(a) ein Diepoxid, und
(b) wenigstens einen Kettenverlängerer, der ein oder mehrere von: einem etwa zwei Aminwasserstoffe pro Molekül enthaltendem Amin, etwa 2 Sulfonamidwasserstoffe pro Molekül enthaltenden Sulfonamiden oder etwa 2 phenolische Hydroxygruppen pro Molekül enthaltenden Bisphenolen in einer solchen Menge enthält, daß das Matrixharz thermoplastisch ist und ein EEW von wenigstens 25.000 hat.

7. Verfahren zur Herstellung eines Matrix-Verbundwerkstoffes durch die Stufen von:
(1) wenigstens teilweises Vorreagieren einer Matrixharz-Vorläufer enthaltenden Formulierung zur Bildung von Oligomeren oder eines thermoplastischen Matrixharzes;
(2) Imprägnieren einer auf Fasern basierenden Verstärkung mit den Oligomeren oder dem thermoplastischen Matrixharz; und
(3) falls erforderlich, Erhitzen der Oligomeren, um deren Reaktion und Bildung eines Matrixharzes herbeizuführen,
**dadurch gekennzeichnet, daß** die Formulierung enthält:
(a) ein Diepoxid, und
(b) wenigstens einen Kettenverlängerer, der ein oder mehrere von: einem etwa zwei Aminwasserstoffe pro Molekül enthaltendem Amin, etwa 2 Sulfonamidwasserstoffe pro Molekül enthaltenden Sulfonamiden oder etwa 2 phenolische Hydroxygruppen pro Molekül enthaltenden Bisphenolen in einer solchen Menge enthält, daß das Matrixharz thermoplastisch ist und ein EEW von wenigstens 25.000 hat.

8. Verfahren nach einem der Ansprüche 6 oder 7, bei welchem der Kettenverlängerer ein oder mehrere ist von: einem primären Alkylamin, einem primären Alkanolamin, einem Di-(sekundärenamin) oder einem Bisphenol.

9. Verfahren nach einem der Ansprüche 6 bis 8, bei welchem wenigstens 50 Äquivalent-% des Kettenverlängerers aus einem primären Alkylamin oder Alkanolamin bestehen.

10. Verfahren nach einem der Ansprüche 6 bis 9, bei welchem das Verhältnis von Kettenverlängerer zu Diepoxid wenigstens 1:1 ist.

11. Verfahren nach einem der Ansprüche 6 bis 10, bei welchem die Matrixharz-Vorläufer derart ausgewählt werden, daß das Matrixharz in Dimethylformamid bei 25°C bis zu wenigstens 1 Gew.-% löslich ist.

## Revendications

1. Matériau composite thermoplastique comportant :
a) des fibres de renfort,
b) et une matrice en résine,
**caractérisé en ce que** la résine de la matrice est un polymère thermoplastique de type polyéther hydroxylé à motifs de type phénoxy.

2. Emploi, dans un matériau composite comportant des fibres de renfort, d'un polymère thermoplastique de type polyéther hydroxylé à motifs de type phénoxy en tant que résine formant la matrice.

3. Invention conforme à l'une des revendications 1 et 2, dans laquelle le polymère de type polyéther hydroxylé à motifs de type phénoxy contient n'importe lesquels des motifs répétés suivants :
1) des motifs répétés de polyéther à groupes fonctionnels hydroxy, représentés par la formule 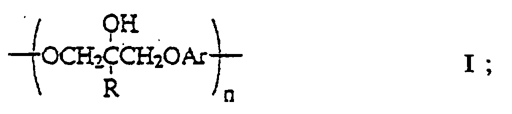
2) des motifs répétés de polyéther à groupes fonctionnels hydroxyméthyle ou amide, représentés par la formule 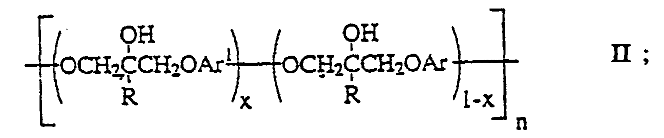
3) des motifs répétés de poly(éther sulfonamide) à groupes fonctionnels hydroxy, représentés par la formule 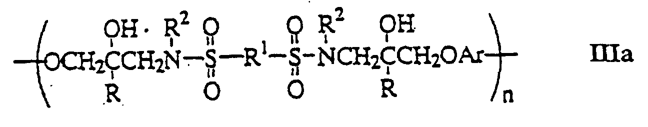 ou 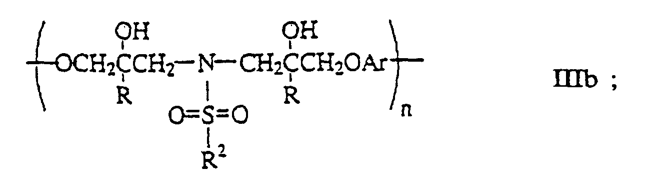
4) des motifs répétés de polyamide éther) hydroxylé, représentés indépendamment par l'une des formules 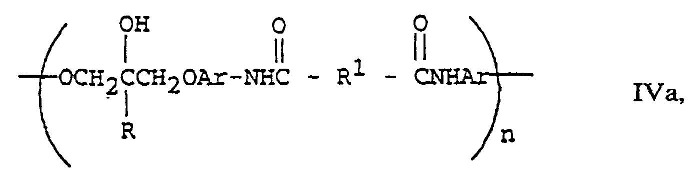 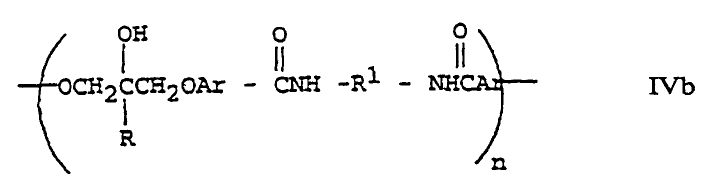 et 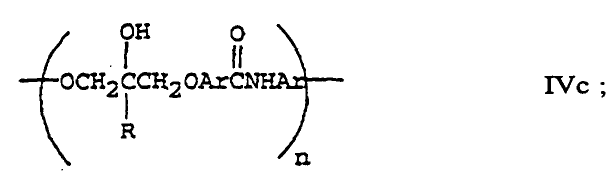
5) des motifs répétés de poly(ester éther) hydroxylé, représentés par la formule 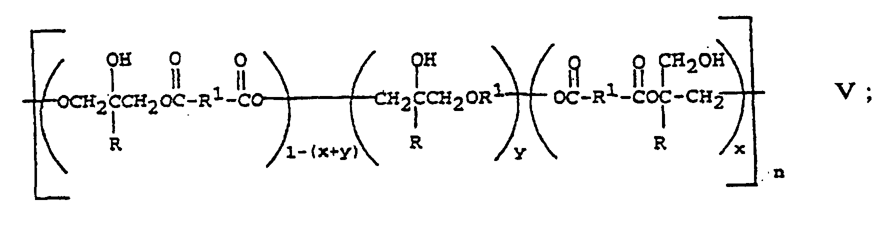
6) des motifs répétés de poly(amide éther) hydroxylé, représentés par l'une des formules 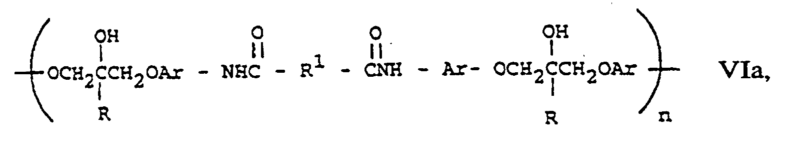 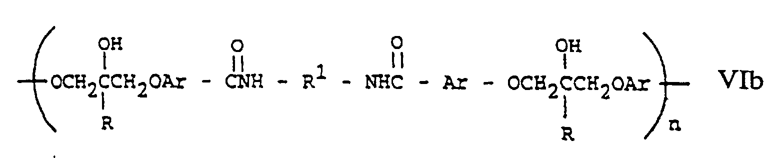 et 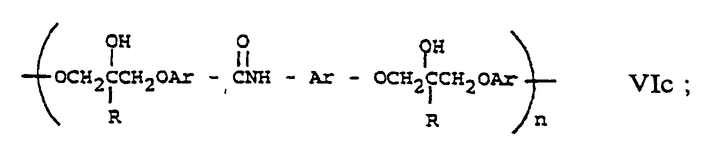
7) des motifs répétés de poly(éther aminé), représentés par la formule 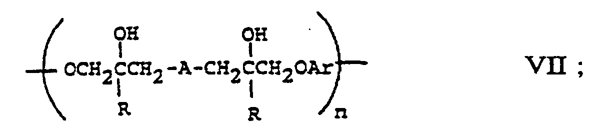
8) et des motifs répétés de type phénoxy-éther hydroxylés, représentés par la formule 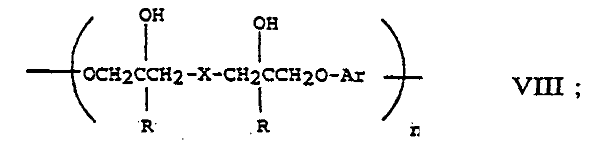
dans lesquelles formules :
chaque symbole Ar représente individuellement un fragment aromatique divalent non substitué, un fragment aromatique divalent substitué ou un fragment hétéroaromatique, ou une combinaison de différents fragments aromatiques divalents non substitués, fragments aromatiques substitués ou fragments hétéroaromatiques ;
R représente individuellement un atome d'hydrogène ou un fragment hydrocarbyle monovalent ;
chaque symbole Ar¹ représente un fragment aromatique divalent ou une combinaison de fragments aromatiques divalents portant des groupes amide ou hydroxyméthyle ;
R¹ représente individuellement un fragment principalement hydrocarbylène ;
R² représente individuellement un fragment hydrocarbyle monovalent ;
A représente un fragment amino divalent ou une combinaison de différents fragments amino divalents ;
X représente un fragment divalent de type amino, arylènedioxy, arylènedisulfonamido ou arylènedicarboxy, ou une combinaison de tels fragments ;
Ar² représente un fragment "cardo" représenté par l'une des formules suivantes : 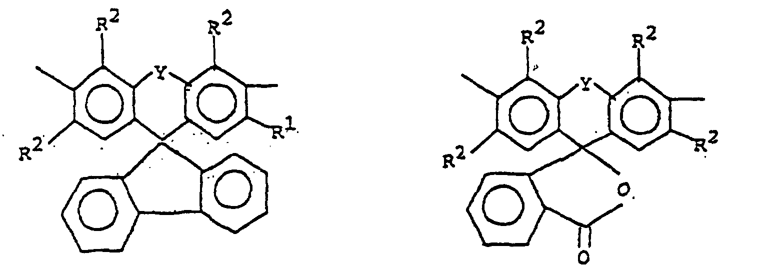 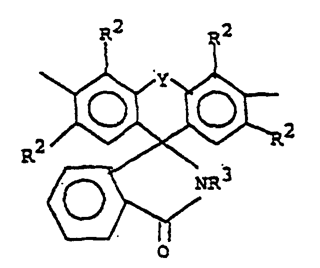
dans lesquelles Y ne représente rien ou représente une liaison covalente ou un raccord choisi parmi les atomes d'oxygène ou de soufre, l'atome carbonyle et les groupes sulfonyle et méthylène ;
n représente un nombre entier valant de 10 à 1000 ;
x vaut de 0,01 à 1,0 ;
et y vaut de 0 à 0,5.

4. Invention conforme à l'une des revendications précédentes, dans laquelle le poids d'équivalent époxyde (PEE) de la résine de matrice vaut au moins 25 000.

5. Invention conforme à l'une des revendications précédentes, dans laquelle la résine de matrice est soluble dans du diméthylformamide, à 25 °C, jusqu'en une concentration d'au moins 1 % en poids.

6. Procédé de fabrication d'un matériau composite à matrice, comportant les étapes consistant :
1) à imprégner un renfort à base de fibres d'une formulation contenant des précurseurs de résine de matrice,
2) et à chauffer la formulation jusqu'à une température à laquelle les précurseurs de résine de matrice réagissent pour former la résine de matrice voulue,
**caractérisé en ce que** les précurseurs de résine de matrice comportent
a) un diépoxyde
b) et au moins un agent d'allongement de chaîne comprenant un ou plusieurs composés des types suivants :
- amine comportant environ deux atomes d'hydrogène de groupe amino par molécule,
- sulfonamide comportant environ deux atomes d'hydrogène de groupe sulfonamido par molécule,
- diphénol comportant environ deux groupes hydroxy de phénol par molécule,
en une quantité telle que la résine de matrice soit thermoplastique et que son poids d'équivalent époxyde vaille au moins environ 25 000.

7. Procédé de fabrication d'un matériau composite à matrice, comportant les étapes consistant :
1) à faire préréagir, au moins partiellement, une formulation contenant des précurseurs de résine de matrice, pour en faire des oligomères ou une résine de matrice thermoplastique,
2) à imprégner un renfort à base de fibres de ces oligomères ou de cette résine de matrice thermoplastique,
3) et à chauffer, si nécessaire, ces oligomères pour les faire réagir et en faire une résine de matrice,
**caractérisé en ce que** la formulation contient
a) un diépoxyde et
b) au moins un agent d'allongement de chaîne comprenant un ou plusieurs composés des types suivants :
- aminé comportant environ deux atomes d'hydrogène de groupe amino par molécule,
- sulfonamide comportant environ deux atomes d'hydrogène de groupe sulfonamido par molécule,
- diphénol comportant environ deux groupes hydroxy de phénol par molécule,
en une quantité telle que la résine de matrice soit thermoplastique et que son poids d'équivalent époxyde vaille au moins environ 25 000.

8. Procédé conforme à l'une des revendications 6 et 7, dans lequel l'agent d'allongement de chaînes comprend un ou plusieurs composés des types suivants : alkylamine primaire, alcanolamine primaire, di(amine secondaire) et diphénol.

9. Procédé conforme à l'une des revendications 6 à 8, dans lequel l'agent d'allongement de chaînes est constitué, pour au moins 50 % en équivalents, d'une alkylamine ou alcanolamine primaire.

10. Procédé conforme à l'une des revendications 6 à 9, dans lequel le rapport de l'agent d'allongement de chaînes au diépoxyde vaut au moins 1/1.

11. Procédé conforme à l'une des revendications 6 à 10, dans lequel les précurseurs de résine de matrice sont choisis de telle sorte que la résine de matrice est soluble dans du diméthylformamide, à 25 °C, jusqu'en une concentration d'au moins 1 % en poids.
